# EUROPÄISCHE PATENTSCHRIFT

(11) **EP 2 860 501 B1**
(45) Veröffentlichungstag und Bekanntmachung des Hinweises auf die Patenterteilung: **14.09.2016**
(21) Anmeldenummer: 13188141.9
(22) Anmeldetag: 10.10.2013
(51) Int. Cl.: G01G 23/01

(54) **Wägezelle mit einer Vorrichtung zur Korrektur exzentrischer Belastungsfehler und Verfahren zur Korrektur exzentrischer Belastungsfehler**
Weighing cell with a device for correcting eccentric load errors and method for correcting eccentric load errors
Cellule de pesée dotée d'un dispositif de correction d'erreurs de charge excentriques et procédé de correction d'erreurs de charge excentriques

(43) Veröffentlichungstag der Anmeldung: 15.04.2015
(73) Patentinhaber: Mettler-Toledo GmbH, 8606 Greifensee (CH)
(72) Erfinder: Burkhard, Hans-Rudolf, 8492 Wila (CH)

(56) Entgegenhaltungen:
- DE-A1-102011 000 554
- US-A1- 2013 175 098

## Beschreibung

Die vorliegende Erfindung bezieht sich auf eine Wägezelle mit einer Parallelführung, insbesondere einer sogenannten Parallelogrammführung, worin ein beweglicher, eine Waagschale tragender Parallelogrammschenkel durch einen ersten und einen zweiten Parallellenker an einem feststehenden Parallelogrammschenkel geführt ist. Die Parallelogrammschenkel und die Parallellenker sind gelenkig, vorzugsweise durch Biegelager, miteinander verbunden. Die von dem beweglichen Parallelogrammschenkel getragene Waagschale nimmt die zu wägende Last auf, deren auf die Waagschale wirkende Kraft gegebenenfalls über einen die Kraft untersetzenden Kraftübertragungshebel an einen Messaufnehmer übertragen wird. Die Parallelführung, das Kraftübertragungssystem und der Messaufnehmer bilden im Wesentlichen die Wägezelle eines gravimetrischen Messinstruments. Es sind im Stand der Technik verschiedene Funktionsprinzipien von Wägezellen bekannt, wie beispielsweise Wägezellen mit Dehnungsmessstreifen, Wägezellen mit Saiten, oder EMFC- Wägezellen (Electromagnetic Force Compensation).

Ein Wesenszug der vorstehend beschriebenen Wägezellen, welcher im Übrigen allen Waagen mit geführten (im Unterschied zu hängenden) Waagschalen gemeinsam ist, besteht darin, dass die von der Waagschale an den Messaufnehmer übertragene Gewichtskraft im allgemeinen geringfügig davon abhängt, ob die Wägelast zentrisch auf der Waagschale platziert ist oder aus der Mitte der Waagschale gegen den Rand verschoben ist. Dies kann die unerwünschte Folge haben, dass eine Waage für ein und dieselbe Wägelast verschiedene Gewichtsbeträge anzeigt, je nachdem wo die Wägelast auf der Waagschale platziert wurde. Diese Abweichungen bei exzentrischer Platzierung der Wägelast auf der Waagschale werden als exzentrische Belastungsfehler, in der fachlichen Umgangssprache oft auch als Eckenlastfehler, bezeichnet.

Bei einer Parallelogrammführung im oben beschriebenen Sinn werden exzentrische Belastungsfehler weitgehend dadurch verursacht, dass die Parallellenker von einer idealen, absoluten Parallelität geringfügig abweichen. Dabei entspricht die relative Grösse des exzentrischen Belastungsfehlers, das heisst die beobachtete Gewichtsabweichung im Verhältnis zur Grösse des betreffenden Testgewichts und zu seiner Verschiebung aus dem Zentrum der Waagschale, etwa der den Fehler verursachenden relativen geometrischen Parallelitätsabweichung. Allerdings muss festgehalten werden, dass exzentrische Belastungsfehler nicht allein durch geometrische Parallelitätsabweichungen sondern auch durch weitere Faktoren verursacht oder zumindest beeinflusst werden können, insbesondere durch innere Materialspannungen und deren Relaxation in den als elastische Biegelager ausgebildeten Gelenkstellen der Parallelogrammführung. Der von diesen weiteren Faktoren verursachte Anteil der exzentrischen Belastungsfehler ist ausserdem in vielen Fällen keine lineare Funktion der Verschiebung des Testgewichtes aus dem Zentrum der Waagschale.

Man unterscheidet zwischen einem exzentrischen Belastungsfehler in der Längsrichtung und einem exzentrischen Belastungsfehler in der Querrichtung der Parallelogrammführung, entsprechend der Verschieberichtung des Testgewichts auf der Waagschale bei einer Prüfung der Waage bezüglich exzentrischer Belastungsfehler.

Im heutigen Stand der Technik werden verschiedene Wege beschritten, um eine Verfälschung des Wägeresultats durch exzentrische Belastungsfehler zu vermeiden, wobei sich die aktuell praktizierten oder vorgeschlagenen Lösungen grob gesprochen in drei Gruppen unterteilen lassen.

Eine erste Lösung besteht darin, dass eine Waage mit Mitteln zur Detektion eines exzentrischen Belastungsfehlers ausgerüstet ist und gegebenenfalls eine Warnanzeige oder ein Warnsignal abgibt. Damit werden exzentrische Belastungsfehler jedoch nicht vermieden oder korrigiert, sondern der Benützer der Waage wird lediglich über ihr Vorhandensein und gegebenenfalls ihr Ausmass informiert. So wird z.B. in JP 61-082118 A [1] vorgeschlagen, dass bei Auftreten einer durch Temperatursensoren registrierten Temperaturdifferenz zwischen dem feststehenden und dem beweglichen Parallelogrammschenkel eine automatische exzentrische Belastungsprüfung der Waage durchgeführt wird, wobei in der Waage eingebaute motorisch betätigte Testgewichte exzentrisch mit dem Lastaufnehmer der Wägezelle gekoppelt werden und im Falle eines die Toleranz überschreitenden exzentrischen Belastungsfehlers eine Warnanzeige oder ein Warnsignal ausgelöst wird. In ähnlicher Weise wird in JP 9-043043 A [2] ein eingebauter automatischer Kalibriermechanismus mit mehreren exzentrisch angeordneten Kalibriergewichten dazu verwendet, nebst der Empfindlichkeit und der Linearität auch das exzentrische Belastungsverhalten der Waage zu überprüfen und gegebenenfalls eine Warnanzeige oder ein Warnsignal auszulösen.

Ein zweiter Lösungsweg besteht darin, dass die aktuelle Schwerpunktslage des Wägegutes auf der Waagschale bei jeder Wägung durch eine in der Waage eingebaute Anordnung von Lastsensoren (z.B. in der Form von Dehnungsmessstreifen) und durch zugehörige Signalverarbeitungsmittel bestimmt wird und dass eine der betreffenden Schwerpunktsposition zugeordnete exzentrische Belastungskorrektur im anzuzeigenden Wägeresultat eingerechnet wird. Dieser Weg wird in verschiedenen Abwandlungen in DE 10 2006 031 950 B3 [3], DE 10 2008 062 742 A1 [4] und DE 196 32 709 C1 [5] beschritten.

Ein weiteres Beispiel einer rechnerischen Kompensation eines exzentrischen Belastungsfehlers findet sich in DE 10 2011 000 554 A1 [6], worin eine Wägezelle beschrieben wird, bei welcher eine kompakte Waagschale auf einem Lastaufnehmer in der Form eines Kragarms angeordnet ist, welcher sich von einem Lasteinleitungspunkt der Wägezelle weg in der Längsrichtung der Parallelogrammführung erstreckt. Durch die im Verhältnis zur Länge des Kragarms kleine Dimension der Waagschale ergibt sich eine im Wesentlichen konstante exzentrische Schwerpunktsposition der Wägelast. Es wird ein Justiermechanismus vorgeschlagen, bei welchem mindestens zwei motorisch betätigte Justiergewichte individuell an verschiedenen Auflagestellen eines Justierkragarms aufgelegt werden, welcher sich vom Lasteinleitungspunkt in der entgegengesetzten Richtung des Lastträgerkragarms erstreckt. Aus den zugehörigen Wägeresultaten lässt sich der exzentrische Belastungsfehler rechnerisch ermitteln und kompensieren. Dieses Konzept ist jedoch in seiner Anwendbarkeit beschränkt auf Lastzellen bei denen eine exzentrische Schwerpunktslage der Wägelast in der Längsrichtung der Parallelogrammführung, wie im hier beschriebenen Falle, im Wesentlichen konstant und zum vornherein gegeben ist.

Als dritter Lösungsweg zur Vermeidung von durch exzentrische Belastung hervorgerufenen Wägefehlern in einer Lastzelle mit Parallelogrammführung ist im heutigen Stand der Technik trotz der vorstehend beschriebenen Möglichkeiten einer rechnerischen Kompensation weiterhin das herkömmliche, von der traditionellen Roberval-Parallelogrammführung übernommene Lösungskonzept vorherrschend, bei dem man die nach dem Montagevorgang vorhandenen exzentrischen Belastungsfehler durch mechanisches Justieren korrigiert, d.h. durch kleine Lageverschiebungen welche z.B. mittels Justierschrauben oder durch plastisches Deformieren erzeugt werden.

Aufgrund der oben beschriebenen weitgehenden Korrelation zwischen den exzentrischen Belastungsfehlern und der Geometrie der Parallelogrammführung kann ein exzentrischer Belastungsfehler in der Längsrichtung dadurch korrigiert werden, dass man die gegenseitige Längsausrichtung der Parallellenker zueinander in geeigneter Weise verändert indem man z.B. das mit dem feststehenden Parallelogrammschenkel verbundene Biegelager eines der beiden Parallellenkers um einen geringen, dem zu korrigierenden exzentrischen Belastungsfehler entsprechenden Betrag in vertikaler Richtung verschiebt.

Ein exzentrischer Belastungsfehler in der Querrichtung kann dagegen dadurch korrigiert werden, dass man die gegenseitige Querausrichtung der Parallellenker zueinander in geeigneter Weise verändert indem man z.B. das mit dem feststehenden Parallelogrammschenkel verbundene Biegelager eines der beiden Parallellenker um einen geringen, dem zu korrigierenden exzentrischen Belastungsfehler entsprechenden Betrag um die Lenkerlängsachse verdreht.

Eine Parallelogrammführung, bei welcher die nach dem Montagevorgang vorhandenen exzentrischen Belastungsfehler mit einer durch plastisches Deformieren realisierten Justierung korrigiert werden können, wird z.B. in US 7,851,713 B2 [7] beschrieben. Durch Einschnitte am feststehenden Parallelogrammschenkel wird ein Justierbereich gebildet welcher durch Einsetzen eines Justierwerkzeugs und Aufbringen einer geeigneten Justierkraft plastisch derart deformiert werden kann, dass das dem feststehenden Parallelogrammschenkel zugewandte Biegelager des oberen Parallellenkers in dem für die Fehlerkorrektur benötigten Masse sowohl vertikal verschoben als auch bezüglich der Längsachse des Parallellenkers verdreht werden kann.

Eine Variante desselben Konzepts findet sich in US 8,153,913 B2 [8], worin jedoch die für die Korrektur der exzentrischen Belastungsfehler nötigen Verschiebungen in einem Justierbereich des feststehenden Parallelogrammschenkels durch Einstellen von Justierschrauben erzeugt werden.

In US 2013/0175098 [9] wird eine Korrektur der exzentrischen Belastungsfehler in einer Parallelogrammführung vorgeschlagen, bei welcher zunächst eine Vorjustierung durch plastische Deformation mit einem Justierwerkzeug vorgenommen wird und anschliessend eine Feinjustierung mittels Stellelementen, z.B. in Form von Justierschrauben, erfolgt.

Eine topologische Abwandlung des Prinzips der Parallelogrammführung wird in der bereits zitierten US 7,851,713 B2 [7] sowie in US 7,829,802 B2 [10] beschrieben, worin der feststehende Parallelogrammschenkel als ein zylindrisches Rohr ausgebildet ist, welches den beweglichen Parallelogrammschenkel konzentrisch umgibt, wobei der obere und untere Parallellenker als Membranfedern ausgebildet sind. Auch hier wird im feststehenden Parallelogrammschenkel durch geeignete Einschnitte ein Justierbereich gebildet, welcher mit einem Justierwerkzeug und/oder mit Justierschrauben in seiner Lage verstellt werden kann.

Bei den in den vorhergehenden Beispielen und auch in der vorliegenden Erfindung betrachteten Parallelogrammführungen, worin exzentrische Belastungsfehler durch elastische oder plastische Deformation eines oder mehrerer Justierbereiche korrigiert werden, hat sich gezeigt, dass eine z.B. im Anschluss an die Montage der Wägezelle vorgenommene Justierung die vorhandenen exzentrischen Belastungsfehler nicht permanent zum Verschwinden bringt. Die Relaxation innerer Reaktionskräfte und Spannungen, welche in der Wägezelle bei deren Montage und Justierung erzeugt werden, sowie auch äussere Einflüsse wie Erschütterungen und Temperaturänderungen haben zur Folge, dass exzentrische Belastungsfehler auch später im Gebrauch der Waage zumindest in kleinerem Ausmasse wieder auftreten können. Bei einer turnusgemässen Inspektion und Nachjustierung der Waage wird deshalb üblicherweise nebst der Empfindlichkeit und Linearität auch das exzentrische Belastungsverhalten, die sogenannte "Eckenlastgenauigkeit" der Waage, überprüft und wenn nötig nachjustiert.

Vor allem Waagen der höchsten Genauigkeitsklasse, meist als Analysenwaagen bezeichnet, sind jedoch häufig mit sogenannten automatischen Kalibriervorrichtungen ausgestattet, mit denen mindestens die Empfindlichkeit und oft auch die Linearität der Waage entweder vollautomatisch oder durch Betätigen einer Taste geprüft und wenn nötig nachgeeicht werden kann. Es stellt sich daher die Frage, ob auch die exzentrischen Belastungsfehler mit einer automatisch arbeitenden Vorrichtung überwacht und wenn nötig nachjustiert werden könnten. Dadurch würden die periodischen Inspektionen durch Servicetechniker weitgehend überflüssig, und die Unterhaltskosten der Waage würden somit stark reduziert.

Die Erfindung hat deshalb zur Aufgabe, eine Wägezelle vorzuschlagen, bei welcher ein möglicherweise vorhandener exzentrischer Belastungsfehler am Einsatzort ermittelt und anschliessend korrigiert werden kann, ohne dass ein Servicetechniker beigezogen werden muss.

Diese Aufgabe wird gelöst durch eine Wägezelle mit einer Wägeelektronik und mit einer Parallelogrammführung nach Anspruch 1, welche einen beweglichen, mit einem Wägelastaufnehmer und einem Testlastaufnehmer verbundenen Parallelogrammschenkel und einen feststehenden, mit einer tragenden Grundstruktur der Wägezelle verbundenen Parallelogrammschenkel sowie mindestens zwei Parallel-Lenker umfasst, welche die Parallelogrammschenkel durch Lagerstellen verbinden, wobei zentral zum Wägelastaufnehmer eine vertikale Wägelastangriffsachse definiert ist. Die Wägezelle umfasst ferner eine Testgewichtsbetätigungsvorrichtung, mit welcher mindestens ein Testgewicht an mindestens drei nicht auf einer Geraden liegenden Testgewichtsauflagestellen des Testlastaufnehmers platziert werden kann. Eine der Wägezelle zugeordnete Prozessoreinheit erfüllt die Funktionen, das Platzieren des mindestens einen Testgewichts an den Testgewichtsauflagestellen mit einem Steuersignal zu steuern und jeweils anschliessend von der Wägeelektronik ein der betreffenden Testgewichtsauflagestelle zugehöriges Testwägesignal zu empfangen sowie aufgrund der Testwägesignale exzentrische Belastungsfehler der Wägezelle zu ermitteln. Die Wägezelle ist insbesondere mit einer Vorrichtung zur Korrektur der exzentrischen Belastungsfehler ausgerüstet, welche mindestens eine erste und eine zweite motorisch betätigte und von der Prozessoreinheit gesteuerte Stelleinheit umfasst, wobei mit jeder Stelleinheit jeweils eine geometrisch-mechanische Veränderung in der Parallelogrammführung erzeugbar ist, wodurch eine dieser Veränderung und somit dieser Stelleinheit zugeordnete exzentrische Belastungsfehlerkomponente korrigiert oder zumindest verringert werden kann.

Bei dieser Lösung wird somit ein von der Prozessoreinheit gesteuerter Testzyklus durchgeführt, in welchem ein Testgewicht nacheinander an verschiedenen Testgewichtsauflagestellen des Testlastaufnehmers platziert wird und für jede Position des Testgewichts jeweils ein zugehöriger Testgewichtswert ermittelt wird. Falls diese Testgewichtswerte voneinander abweichen, können aus den Differenzen die exzentrischen Belastungsfehler bestimmt werden, aufgrund derer die Stelleinheiten sodann zur Ausführung der erforderlichen Justiereinstellungen gesteuert werden. Wenn andrerseits die durch den Testzyklus ermittelten exzentrischen Belastungsfehler eine vorgegebene Plausibilitätsgrenze überschreiten, so kann daraus auf einen Defekt der Waage geschlossen werden, meist auf eine durch mechanischen Schock oder grobe Behandlung verursachte Beschädigung der Parallelführung. Zweckmässigerweise wird die Prozessoreinheit in diesem Falle eine Fehlermeldung ausgeben.

Die Tatsache, dass mindestens drei nicht auf einer Geraden liegende Testlastauflagestellen notwendig sind ergibt sich aufgrund der zweidimensionalen Natur der exzentrischen Belastungsfehler mit voneinander unabhängigen Komponenten in der Längs- und Querrichtung der Parallelogrammführung. In einer naheliegenden Anordnung können z.B. drei Auflagestellen so angeordnet sein, dass sie einen rechten Winkel definieren, wobei ein Schenkel des rechten Winkels in der Längsrichtung und der andere in der Querrichtung der Parallelogrammführung orientiert ist. Die Justiereinstellungen der exzentrischen Belastungsfehler in der Längsrichtung und in der Querrichtung beeinflussen sich in den meisten Fällen gegenseitig, sodass eine Justierung des Fehlers in Längsrichtung eine Dejustierung in der Querrichtung verursacht und umgekehrt eine Justierung des Fehlers in Querrichtung eine Dejustierung in der Längsrichtung verursacht. Dies hat zur Folge, dass der Korrekturzyklus solange iteriert werden muss, bis die exzentrischen Belastungsfehler innerhalb einer vorgeschriebenen Toleranz liegen.

Die prozessorgesteuerte Durchführung des Korrekturvorganges hat unter anderem den Vorteil, dass die gegenseitige Beeinflussung der Justierungen in der Längs- und Querrichtung der Parallelogrammführung in der Berechnung der auszuführenden Justiereinstellungen mit einbezogen werden kann, sodass die exzentrischen Belastungsfehler in einer minimalen Anzahl von Iterationszyklen unter die vorgeschriebene Toleranz korrigiert werden können und der Korrekturvorgang somit in kürzester Zeit abgeschlossen werden kann.

In einer bevorzugten Ausführungsform der erfindungsgemässen Wägezelle befinden sich die Testgewichtsauflagestellen in einem die Wägelastangriffsachse enthaltenden, den horizontalen Dimensionen des Wägelastaufnehmers entsprechenden Bereich. Dabei umfasst die Testbelastungsvorrichtung vorzugsweise fünf Testgewichtsauflagestellen, nämlich eine erste Testauflagestelle, welche mit der Wägelastangriffsachse zentriert ist, eine zweite und eine dritte Testgewichtsauflagestelle, welche bezüglich der Längsrichtung der Parallelogrammführung von der ersten Testauflagestelle nach beiden Seiten je um eine gleiche Distanz verschoben sind, sowie eine vierte und eine fünfte Testgewichtsauflagestelle, welche bezüglich der Querrichtung der Parallelogrammführung von der ersten Testauflagestelle nach beiden Seiten je um eine gleiche Distanz verschoben sind.

Es sind jedoch auch vorteilhafte Ausführungsformen möglich, bei welchen die Testgewichtsauflagestellen sich in einem ausserhalb der Wägelastangriffsachse liegenden Bereich befinden. Dies trifft insbesondere auf eine bekannte Bauform von Wägezellen zu, bei denen die Waagschale von einem Kragarm getragen wird, welcher seitlich aus dem Baukörper der Wägezelle herausragt. Die Testbelastungsvorrichtung kann in diesem Fall z.B. oberhalb oder unterhalb der Parallelogrammführung im Innern des Baukörpers der Wägezelle angeordnet sein. Bei einer solchen zur Wägelastangriffsachse exzentrischen Anordnung des Testlastaufnehmers werden allerdings die exzentrischen Belastungsfehler der Wägezelle durch die gemessenen Abweichungen beim Verschieben des Testgewichts in die Testgewichtsauflagestellen nicht direkt dargestellt. Erfindungsgemäss ist deshalb in diesem Fall vorgesehen, dass anschliessend an den ursprünglichen Werksabgleich der exzentrischen Belastungsfehler ein Messzyklus mit dem Testgewicht in den verschiedenen Testgewichtsauflagestellen durchgeführt wird und dass die Resultate oder davon abgeleitete Werte durch die Prozessoreinheit gespeichert werden, damit sie später im Gebrauch der Waage als Referenzwerte für die erfindungsgemässe Korrektur der exzentrischen Belastungsfehler verwendet werden können.

Wenn in einem solchen Falle im Bedienumfeld der Benutzers die Testgewichtswerte von den gespeicherten Werten abweichen, können aus den Differenzen der Testgewichtswerte und von in einem Speicher der Prozessoreinheit gespeicherten Werte die exzentrischen Belastungsfehler bestimmt werden, aufgrund derer die Stelleinheiten sodann zur Ausführung der erforderlichen Justiereinstellungen gesteuert werden.

Eine mögliche Temperaturabhängigkeit eines exzentrischen Belastungsfehlers kann ebenfalls im Rahmen des Werksabgleichs, während der Aufnahme der Parameter zur Temperaturkompensation ermittelt werden und während der Korrektur der exzentrischen Belastungsfehler im Bedienumfeld des Benutzers Berücksichtigung finden.

In einer bevorzugten Ausführungsform wird das mindestens eine Testgewicht horizontal gleitend aus einer Parkierstellung auf den Testlastaufnehmer verschoben, durch lineares Verschieben auf dem Testlastaufnehmer sowie karussellartiges Drehen des Testlastaufnehmers in die verschiedenen Testgewichtsauflagestellen bewegt, und anschliessend zurück in die Parkierstellung verschoben, wobei das Testgewicht in der Parkierstellung vom Testlastaufnehmer entkoppelt ist und auf seinem Verschiebungsweg und während der Zwischenhalte in den Testgewichtsauflagestellen den Testlastaufnehmer kontinuierlich belastet..

In einer weiteren bevorzugten Ausführungsform wird das mindestens eine Testgewicht durch die Testgewichtsbetätigungsvorrichtung nacheinander an verschiedenen Testgewichtsauflagestellen abgesetzt und dazwischen vom Testlastaufnehmer abgehoben.

In einer ebenfalls bevorzugten Ausführungsform ist eine Mehrzahl von Testgewichten vorhanden, wobei jeder Testauflagestelle ein Testgewicht mit einer eigenen Testgewichtsbetätigungsvorrichtung zugeordnet ist, durch welche das Testgewicht auf der Testauflagestelle abgesetzt und von derselben abgehoben werden kann.

In der zuletzt genannten Ausführungsform kann die Vorrichtung zur Korrektur exzentrischer Belastungsfehler gleichzeitig die Funktion einer automatischen Kalibriervorrichtung erfüllen, in welcher durch Auflegen von Kombinationen der Testgewichte die Empfindlichkeit und ggf. die Linearität geprüft und wenn nötig korrigiert werden kann.

In bevorzugten Ausführungsformen der erfindungsgemässen Wägezelle ist mindestens einer der Parallellenker im Bereich der dem feststehenden Parallelogrammschenkel zugewandten Lagerstelle in Längsrichtung in zwei Lenkerenden aufgespaltet, und jedem der zwei Lenkerenden ist ein Justierbereich zugeordnet, mit welchem das betreffende Lenkerende in vertikaler Richtung verschoben werden kann, wobei eine erste Stelleinheit zur vertikalen Verschiebung des ersten Lenkerendes und eine zweite Stelleinheit zur vertikalen Verschiebung des zweiten Lenkerendes vorhanden sind.

Alternativ zur vorangehend beschriebenen Ausführungsform kann der feststehende Parallelogrammschenkel einen Justierbereich umfassen, mit welchem das an den Justierbereich angrenzende Lenkerende einerseits in vertikaler Richtung auf- und ab bewegt und andrerseits um die Längsachse des betreffenden Parallellenkers verdreht werden kann, wobei eine erste Stelleinheit zur vertikalen Verschiebung und eine zweite Stelleinheit zur Verdrehung des an den Justierbereich angrenzenden Lenkerendes vorhanden sind.

Die Stelleinheiten sind in jedem Fall vorteilhafterweise selbsthemmend gestaltet, sodass eine eingestellte Justierung nach Abstellen der Stromzufuhr erhalten bleibt.

Die erfindungsgemässe Wägezelle mit einer Vorrichtung zur Korrektur exzentrischer Belastungsfehler einer Wägezelle mit Parallelogrammführung kann vorteilhafterweise in Analysenwaagen mit einer Wägekapazität von 20 bis 500 Gramm und mit einer digitalen Anzeigeauflösung von 0,001 bis 0,1 Milligramm verwendet werden und eignet sich insbesondere auch für eine Waage gemäss dem in EP 1 195 586 B1 [11] beschriebenen Aufbaukonzept. Darin ist der Wägegutträger an einer durch Durchführungen in der Rückwand des Wägeraums reichenden Koppelanordnung abnehmbar mit dem beweglichen Parallelogrammschenkel der Wägezelle verbunden und erstreckt sich auslegerartig oberhalb des Wägeraumbodens von der Wägeraumrückwand in den Wägeraum hinein. Unterhalb des Wägegutträgers ist eine eingebaute Kalibriervorrichtung angeordnet, deren Kalibriergewichtsaufnehmer sich ebenfalls auslegerartig vom beweglichen Parallelogrammschenkel in einen Hohlraum unterhalb des Wägeraumbodens hinein erstreckt.

In der vorstehend beschriebenen Waage nach EP 1 195 586 B1 [11] kann die erfindungsgemässe Vorrichtung zur Korrektur exzentrischer Belastungsfehler besonders einfach dadurch realisiert werden, dass einerseits die Testbelastungsvorrichtung in Form eines Funktionsmoduls für die Ermittlung der exzentrischen Belastungsfehler in analoger Weise zu der in EP 1 195 586 B1 [11] gezeigten Kalibriervorrichtung im Hohlraum unterhalb des Wägeraumbodens angeordnet wird und dass andrerseits die Wägezelle in geeigneter Weise mit einer Vorrichtung zur Korrektur der exzentrischen Belastungsfehler ausgerüstet wird, welche mindestens eine erste und eine zweite motorisch betätigte und von der Prozessoreinheit gesteuerte Stelleinheit umfasst.

Einzelheiten der erfindungsgemässen Wägezelle mit einer Vorrichtung zur Korrektur exzentrischer Belastungsfehler ergeben sich anhand der Beschreibung der in den Zeichnungen dargestellten Ausführungsbeispiele. Es zeigen:
- Fig. 1A: eine schematische Darstellung einer erfindungsgemässen Wägezelle, von der Seite gesehen,
- Fig. 1B: eine schematische Darstellung einer erfindungsgemässen
- Fig.2A: Wägezelle, von oben gesehen, eine schematische Darstellung der erfindungsgemässen Wägezelle in einer alternativen Ausführungsform, von der Seite gesehen
- Fig. 2B: eine schematische Darstellung der erfindungsgemässen Wägezelle in einer alternativen Ausführungsform, von oben gesehen,
- Fig. 3A: eine Ansicht von der Seite einer weiteren Ausführungsform eines Testlastaufnehmers,
- Fig. 3B: eine dreidimensionale Ansicht der weiteren Ausführungsform eines Testlastaufnehmers,
- Fig. 3C: eine dreidimensionale Ansicht der weiteren Ausführungsform eines Testlastaufnehmers, mit um 90° gedrehtem Testlastaufnehmer,
- Fig. 4A: eine schematische Schnittdarstellung entlang der Linie A-A (siehe Fig. 4B), der erfindungsgemässen Wägezelle in einer dritten Ausführungsform, worin jedem Testgewicht eine individuelle Testgewichtsbetätigungsvorrichtung zugeordnet ist,
- Fig. 4B: eine schematische Darstellung der erfindungsgemässen Wägezelle in der dritten Ausführungsform, worin jedem Testgewicht eine individuelle Testgewichtsbetätigungsvorrichtung zugeordnet ist, von oben gesehen
- Fig. 5: eine alternative Ausführungsform des Justierbereichs des feststehenden Parallelogrammschenkels.

Merkmale mit gleicher Funktion und ähnlicher Ausgestaltung sind in der folgenden Beschreibung mit denselben Bezugszeichen versehen.

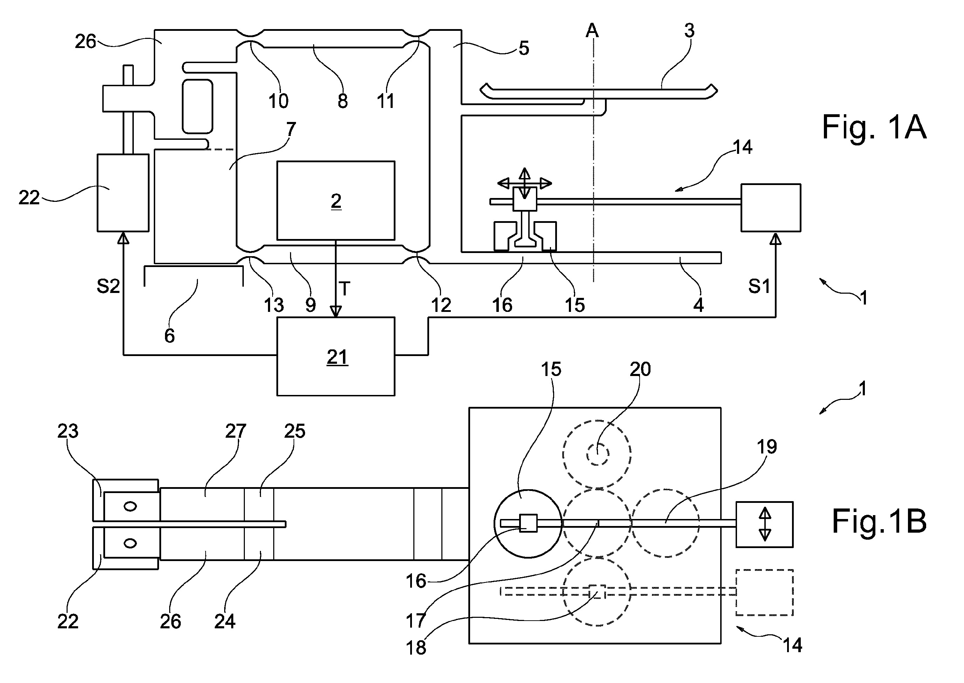

Die Figur 1A und die Figur 1B zeigen in schematischer Darstellung - wobei Figur 1A von der Seite und Figur 1B von oben - eine erfindungsgemässe Wägezelle 1 mit einer Parallelogrammführung und einer Wägeelektronik 2, worin die Wägeelektronik 2 durch ein Blocksymbol dargestellt ist, welches den z.B. auf dem Prinzip der magnetischen Kraftkompensation basierenden Wägesensor sowie die zugehörigen Signalverarbeitungs- und Anzeigefunktionen in sich vereinigt. Die Parallelogrammführung umfasst einen beweglichen, mit einem Wägelastaufnehmer 3 und einem Testlastaufnehmer 4 verbundenen Parallelogrammschenkel 5 und einen feststehenden, mit einer tragenden Grundstruktur 6 der Wägezelle 1 verbundenen Parallelogrammschenkel 7 sowie mindestens zwei Parallel-Lenker 8, 9, welche die Parallelogrammschenkel 5, 7 durch Lagerstellen 10, 11, 12, 13 verbinden, wobei zentral zum Wägelastaufnehmer 2 eine vertikale Wägelastangriffsachse A definiert ist. Zur Wägezelle 1 gehört ferner eine Testgewichtsbetätigungsvorrichtung 14, mittels welcher mindestens ein Testgewicht 15 nacheinander an mindestens drei Testgewichtsauflagestellen 16, 17, 18, 19, 20 des Testlastaufnehmers 4 platziert werden kann, und eine Prozessoreinheit 21 mit den Funktionen, das Platzieren des mindestens einen Testgewichts 15 an den Testgewichtsauflagestellen 16, 17, 18, 19, 20 mit einem Steuersignal S1 zu steuern und jeweils anschliessend von der Wägeelektronik 2 ein der betreffenden Testgewichtsauflagestelle 16, 17, 18, 19, 20 zugehöriges Testwägesignal T zu empfangen sowie aufgrund der Testwägesignale T exzentrische Belastungsfehler der Wägezelle 1 zu ermitteln. Erfindungsgemäss ist die Wägezelle 1 mit einer Vorrichtung zur Korrektur der exzentrischen Belastungsfehler ausgerüstet, welche mindestens eine erste und eine zweite motorisch betätigte und durch Steuersignale S2 der Prozessoreinheit 21 gesteuerte Stelleinheit 22, 23 umfasst, mittels welcher je eine der betreffenden Stelleinheit 22, 23 zugeordnete geometrisch-mechanische Veränderung in der Parallelogrammführung erzeugbar ist, wodurch eine dieser Veränderung und somit dieser Stelleinheit 22, 23 zugeordnete exzentrische Belastungsfehlerkomponente korrigiert oder zumindest verringert werden kann.

Bei der in der Figur 1A und der Figur 1B dargestellten Ausführungsform der Wägezelle 1 befinden sich die Testgewichtsauflagestellen 16, 17, 18, 19, 20 innerhalb eines die Wägelastangriffsachse A enthaltenden, den horizontalen Dimensionen des Wägelastaufnehmers 3 entsprechenden Bereichs.

Der Testlastaufnehmer 4 im Beispiel von Figur 1A und Figur 1B umfasst fünf Testgewichtsauflagestellen 16, 17, 18, 19, 20, nämlich eine erste Testauflagestelle 17, welche in der Wägelastangriffsachse 12 zentriert ist, eine zweite und eine dritte Testgewichtsauflagestelle 16, 19, welche bezüglich der Längsrichtung der Parallelogrammführung von der ersten Testauflagestelle 17 nach beiden Seiten je um eine gleiche Distanz verschoben sind, sowie eine vierte und eine fünfte Testgewichtsauflagestelle 18, 20, welche bezüglich der Querrichtung der Parallelogrammführung von der ersten Testauflagestelle 17 nach beiden Seiten je um eine gleiche Distanz verschoben sind. Diese Anordnung der Testgewichtsauflagestellen 16, 17, 18, 19, 20 ist für Wägezellen mit einer Parallelogrammführung besonders günstig, da die exzentrischen Belastungsfehler in der Längs- und Querrichtung getrennt ermittelt werden können. Es sind jedoch auch andere Anordnungen von Testgewichtsauflagestellen möglich. Beispielsweise könnten vier Testgewichtsauflagestellen jeweils in den Ecken des Testlastaufnehmers 4 aus Figur 1A und Figur 1B angeordnet sein.

In der Figur 1A und der Figur 1B ist weiterhin ersichtlich, dass mindestens einer der Parallellenker 8, 9 im Bereich der dem feststehenden Parallelogrammschenkel 7 zugewandten Lagerstelle 10, 13 in Längsrichtung in zwei Lenkerenden 24, 25 aufgespaltet ist, wobei jedem der zwei Lenkerenden 24, 25 ein Justierbereich 26, 27 zugeordnet ist, mit welchem das betreffende Lenkerende 24, 25 in vertikaler Richtung verschoben werden kann. Die erste Stelleinheit 22 dient zur vertikalen Verschiebung des ersten Lenkerendes 24 und die zweite Stelleinheit 23 dient zur vertikalen Verschiebung des zweiten Lenkerendes 25.

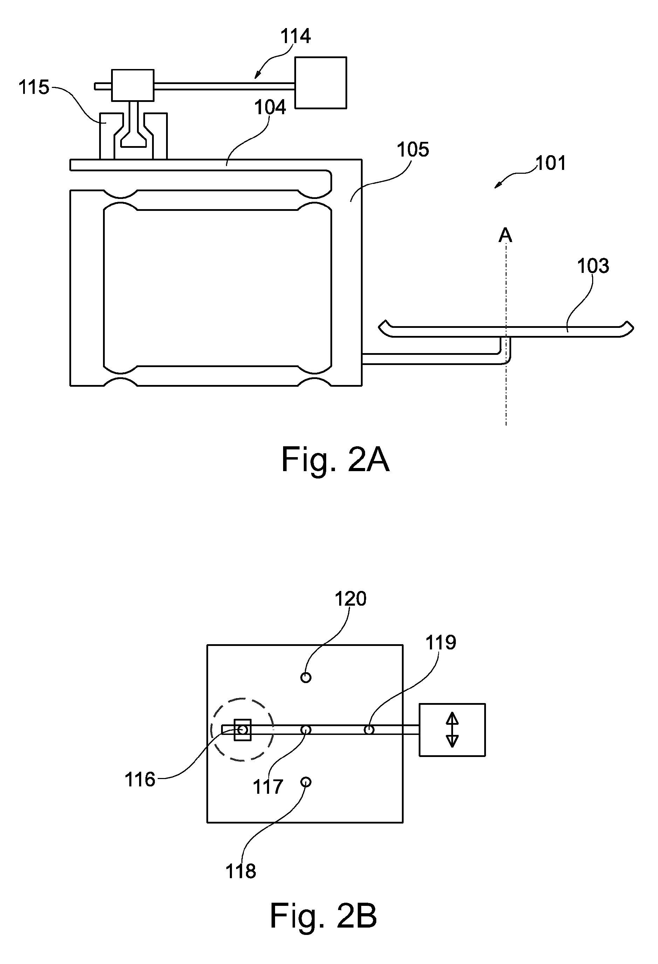

Figur 2A zeigt eine zu Figur 1A und Figur 1B schematische Darstellung der erfindungsgemässen Wägezelle in einer alternativen Anordnung von der Seite gesehen, Figur 2B von oben gesehen, wobei der Testlastaufnehmer 104 mit den Testgewichtsauflagestellen 116, 117, 118, 119, 120 nicht konzentrisch zur Lasteinleitungsachse A unterhalb des von dem beweglichen Parallelogrammschenkel 107 auskragenden Wägelastaufnehmers 103 liegt, sondern z.B. oberhalb der Parallelogrammführung und exzentrisch zur Lasteinleitungsachse A angeordnet ist. Dadurch kann der Wägelastaufnehmer 103 tiefer gelegt werden, was eine ergonomisch günstigere Gestaltung einer mit der Wägezelle 101 ausgestatteten Waage ermöglicht. Weitere zur Lasteinleitungsachse A exzentrische Anordnungen des Testlastaufnehmers 104 sind ebenfalls denkbar, z.B. unterhalb der Parallelogrammführung oder auf der vom Wägelastaufnehmer 103 abgewandten Seite. Bei einer solchen exzentrischen Anordnung des Testlastaufnehmers 104 werden allerdings die exzentrischen Belastungsfehler der Wägezelle durch die gemessenen Abweichungen beim Verschieben des Testgewichts 115 in die Testlastauflagestellen 116, 117, 118, 119, 120 nicht direkt dargestellt. Die Korrelation zwischen den Messresultaten und den tatsächlichen exzentrischen Belastungsfehlern wird deshalb zweckmässigerweise im Werk an der fertig montierten Waage durch einen Testzyklus ermittelt. Nachdem die exzentrischen Belastungsfehler in herkömmlicher Weise durch Auflegen einer externen Prüflast in verschiedenen Positionen auf dem Wägelastaufnehmer 103 ermittelt und anschliessend korrigiert wurden, wird die in der Waage eingebaute Testgewichtsbetätigungsvorrichtung aktiviert, mit welcher das mindestens eine Testgewicht 115 an den Testgewichtsauflagestellen 116, 117, 118, 119, 120 des Testlastaufnehmers 104 platziert wird. Die den Testgewichtsauflagestellen zugeordneten Testwägeresultate für die abgeglichene Waage oder davon abgeleitete Werte werden durch die Prozessoreinheit gespeichert, damit sie später im Gebrauch der Waage als Referenzwerte für die erfindungsgemässe Korrektur der exzentrischen Belastungsfehler verwendet werden können.

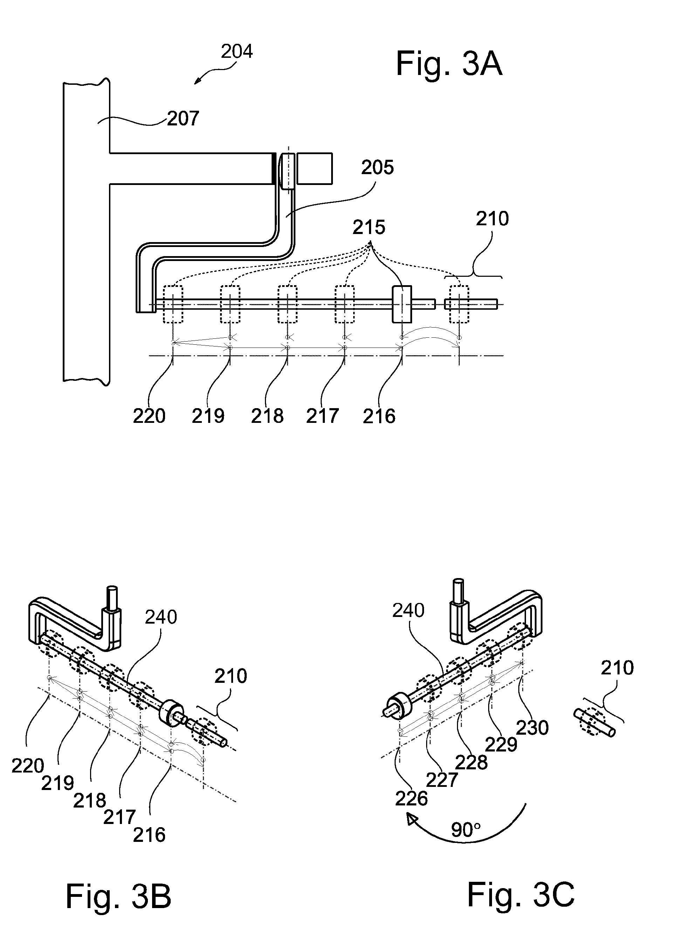

Die Figur 3A illustriert ein alternatives Aufbau- und Funktionskonzept eines Testlastaufnehmers 204 von der Seite. Die weiteren Figuren 3B und 3C zeigen eine dreidimensionale Ansicht des alternativen Aufbau- und Funktionskonzepts des Testlastaufnehmers 204, wobei in Figur 3C der Testlastaufnehmer 204 um 90° gedreht ist Das mindestens eine Testgewicht 215 wird horizontal gleitend aus einer Parkierstellung 210 auf eine Testgewichtsaufnehmerschiene 240 verschoben, durch lineares Verschieben auf der Schiene 240 sowie karussellartiges Drehen des Testlastaufnehmers 204 um 90° von der in Fig. 3a gezeigten Lage in die in Fig. 3b gezeigte Lage in die verschiedenen Testgewichtsauflagestellen 216, 217, 218, 219, 220, 226, 227, 228, 229, 230 bewegt und anschliessend zurück in die Parkierstellung 210 verschoben, wobei das Testgewicht 215 in der Parkierstellung 210 vom Testlastaufnehmer 204 entkoppelt ist und auf seinem Verschiebungsweg und während der Zwischenhalte in den Testgewichtsauflagestellen 216, 217, 218, 219, 220, 226, 227, 228, 229, 230 den Testlastaufnehmer 204 kontinuierlich belastet.

Bei der Ausführungsform von Figur 3A, 3B und 3C, worin das Testgewicht auf seinem Verschiebungsweg und während der Zwischenhalte in den Testgewichtsauflagestellen 216, 217, 218, 219, 220, 226, 227, 228, 229, 230 den Testlastaufnehmer 204 kontinuierlich belastet, ergibt sich der bedeutende Vorteil, dass die Einschwingphasen, welche in einer elektromagnetischen Kompensationswägezelle bei jeder Laständerung auftreten, weitgehend entfallen, wodurch die Zykluszeit für die Serie von Testwägungen an den Testgewichtsauflagestellen 216, 217, 218, 219, 220, 226, 227, 228, 229, 230 entscheidend verkürzt wird.

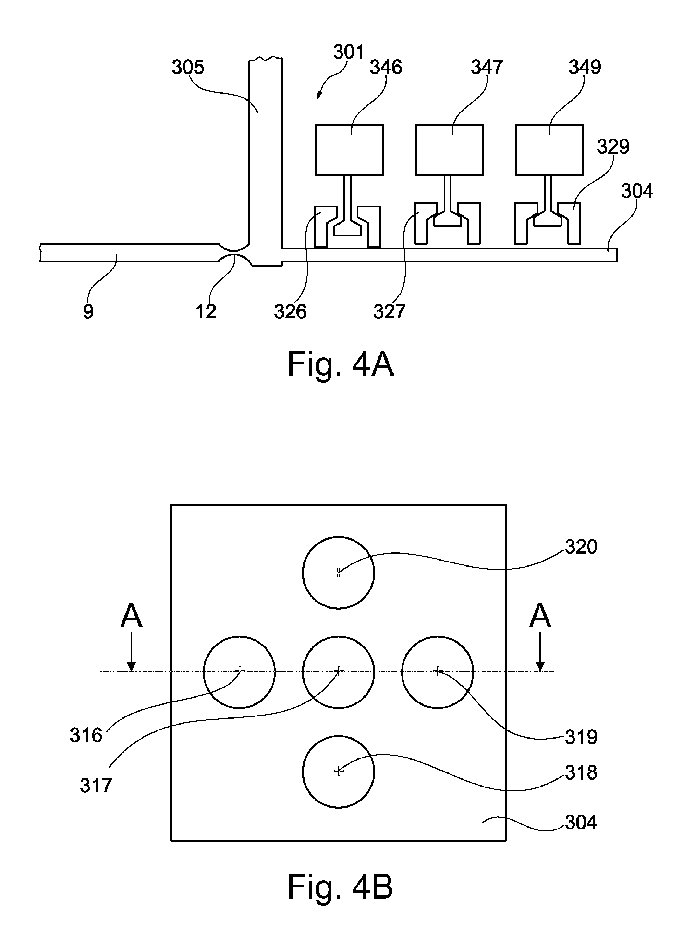

Die Figur 4A und die Figur 4B illustrieren eine weitere Ausführungsform des erfinderischen Konzepts. Die Figur 4A ist dabei eine Schnittdarstellung entlang der Linie A-A aus Figur 4B. Anstelle eines einzigen Testgewichts, welches nacheinander an den verschiedenen Testgewichtsauflagestellen platziert wird, ist eine Mehrzahl von Testgewichten vorhanden, wobei jeder Testgewichtsauflagestelle 316, 317, 318, 319, 320 des Testlastaufnehmers 304 ein Testgewicht 326, 327, 329 (aufgrund der Schnittdarstellung sind die Testgewichte 328, 330 jeweils nicht dargestellt) mit einer eigenen

Testgewichtsbetätigungsvorrichtung 346, 347, 349 (aufgrund der Schnittdarstellung sind die Testgewichtsbetätigungsvorrichtungen 348, 350 jeweils nicht dargestellt) zugeordnet ist, durch welche das Testgewicht 326, 327, 329 auf seiner zugeordneten Testgewichtsauflagestelle 316, 317, 318, 319, 320 abgesetzt und von derselben abgehoben werden kann.

Bei dieser Ausführungsform ist von besonderem Interesse, dass die Anordnung der Testgewichte 326, 327, 328, 329, 330, des Testlastaufnehmers 304 mit den Testgewichtsauflagestellen 316, 317, 318, 319, 320 und der Testgewichtsbetätigungsvorrichtungen 346, 347, 349 gleichzeitig die Funktion einer aus dem Stand der Technik bekannten automatischen Kalibriervorrichtung erfüllen kann, wobei durch Auflegen von Kombinationen der Testgewichte 326, 327 329 die Empfindlichkeit und ggf. die Linearität geprüft und wenn nötig korrigiert wird.

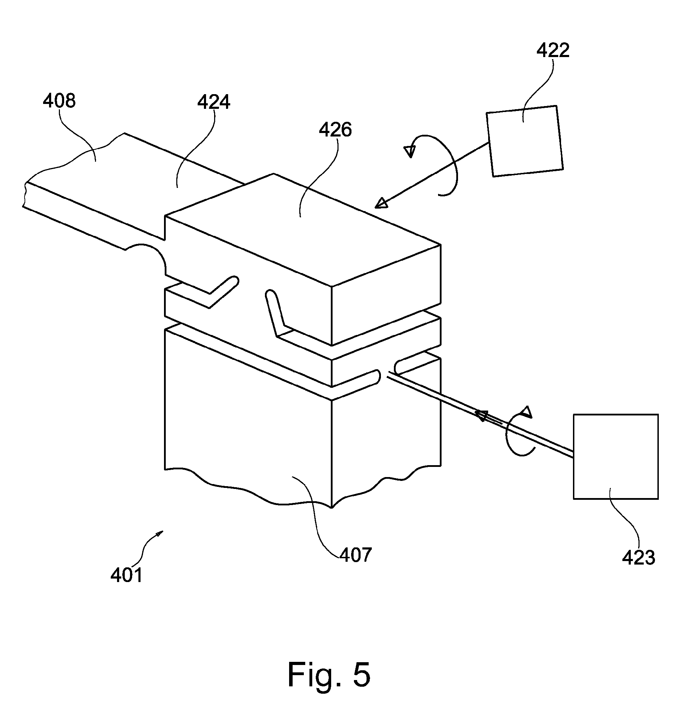

Bezüglich der Korrektur von exzentrischen Belastungsfehlern durch geometrisch-mechanische Veränderungen der Parallelogrammführung zeigt Figur 5 eine weitere mögliche Ausführungsform, worin der feststehende Parallelogrammschenkel 407 einen Justierbereich 426 umfasst, mit welchem ein an den Justierbereich 426 angrenzendes Lenkerende 424 einerseits in vertikaler Richtung auf- und abbewegt und andrerseits um die Längsachse des Parallellenkers 408 verdreht werden kann, wobei eine erste Stelleinheit 422 zur vertikalen Verschiebung und eine zweite Stelleinheit 423 zur Verdrehung des an den Justierbereich 426 angrenzenden Lenkerendes 424 vorhanden ist.

**Liste der Bezugszeichen**

| | |
|---|---|
| 1; 101; 201; 301; 401 | Wägezelle |
| 2 | Wägeelektronik |
| 3, 103 | Wägelastaufnehmer |
| 4; 104; 204; 304 | Testlastaufnehmer |
| 5; 105; 205; 305 | Beweglicher Parallelogrammschenkel |
| 6 | Grundstruktur der Wägezelle |
| 7; 107: 207; 407 | Feststehender Parallelogrammschenkel |
| 8, 9; 408 | Parallellenker |
| 10, 11, 12, 13 | Lagerstellen |
| 14; 346, 347, 348, 349, 350 | Testgewichtsbetätigungsvorrichtung |
| 15; 215; 326, 327, 328, 329, 330 | Testgewicht |
| 16, 17, 18, 19, 20; 116, 117, 118, 119, 120; 216, 217, 218, 219, 220; 226, 227, 228, 229, 230; 316, 317, 318, 319, 320 | Testgewichtsauflagestellen |
| 240 | Testgewichtsaufnehmerschiene |
| 21 | Prozessoreinheit |
| 22; 422 | erste Stelleinheit |
| 23, 423 | zweite Stelleinheit |
| 24, 25; 424 | Lenkerende |
| 26, 27; 426 | Justierbereich |
| 210 | Parkierstellung |
| A | zentrale Wägelastachse, Lasteinleitungsachse |
| S1 | erstes Steuersignal |
| S2 | zweites Steuersignal |
| T | Testwägesignal |

### Liste der angegebenen Unterlagen

- [1]: JP 61-082118 A
- [2]: JP 9-043043 A
- [3]: DE 10 2006 031 950 B3
- [4]: DE 10 2008 062 742 A1
- [5]: DE 196 32 709 C1
- [6]: DE 10 2011 000 554 A1
- [7]: US 7,851,713 B2
- [8]: US 8,153,913 B2
- [9]: US 2013/0175098
- [10]: US 7,829,802 B2
- [11]: EP 1 195 586 B1

## Patentansprüche

1. Wägezelle (1, 101, 201, 301, 401) mit einer Wägeelektronik (2) und einer Parallelogrammführung, worin die Parallelogrammführung einen beweglichen, mit einem Wägelastaufnehmer (3) und einem Testlastaufnehmer (4, 104, 204, 304) verbundenen Parallelogrammschenkel (5, 105, 205, 305) und einen feststehenden, mit einer tragenden Grundstruktur (6) der Wägezelle (1) verbundenen Parallelogrammschenkel (7, 107, 207, 407) sowie mindestens zwei Parallel-Lenker (8, 9, 408) umfasst, welche die Parallelogrammschenkel (5, 105, 205, 305, 7, 107, 207, 407) durch Lagerstellen (10, 11, 12, 13) verbinden, eine vertikale Wägelastangriffsachse (A) definiert ist, ferner mit einer Testgewichtsbetätigungsvorrichtung (14, 346, 347, 348, 349, 350), mittels welcher mindestens ein Testgewicht (15, 215, 326, 327, 328, 329, 330) nacheinander an mindestens drei nicht in einer Geraden liegenden Testgewichtsauflagestellen (16, 17, 18, 19, 20, 116, 117, 118, 119, 120, 216, 217, 218, 219, 220, 226, 227, 228, 229, 230, 316, 317, 318, 319, 320) des Testlastaufnehmers (4) platziert werden kann, und mit einer Prozessoreinheit (21) mit den Funktionen, das Platzieren des mindestens einen Testgewichts (15, 215, 326, 327, 328, 329, 330) an den Testgewichtsauflagestellen (16, 17, 18, 19, 20, 116, 117, 118, 119, 120, 216, 217, 218, 219, 220, 226, 227, 228, 229, 230, 316, 317, 318, 319, 320) mit einem Steuersignal (S1) zu steuern und jeweils anschliessend von der Wägeelektronik (2) ein der betreffenden Testgewichtsauflagestelle (16, 17, 18, 19, 20, 116, 117, 118, 119, 120, 216, 217, 218, 219, 220, 226, 227, 228, 229, 230, 316, 317, 318, 319, 320) zugehöriges Testwägesignal (T) zu empfangen sowie aufgrund der Testwägesignale (T) exzentrische Belastungsfehler der Wägezelle (1, 101, 201, 301, 401) zu ermitteln, **dadurch gekennzeichnet, dass** die Wägezelle (1, 101, 201, 301, 401) mit einer Vorrichtung zur Korrektur der exzentrischen Belastungsfehler ausgerüstet ist, welche mindestens eine erste und eine zweite motorisch betätigte und durch Steuersignale (S2) der Prozessoreinheit (21) gesteuerte Stelleinheit (22, 23, 422, 423) umfasst, mittels welcher je eine der betreffenden Stelleinheit (22, 23, 422, 423) zugeordnete geometrisch-mechanische Veränderung in der Parallelogrammführung erzeugbar ist, wodurch eine dieser Veränderung und somit dieser Stelleinheit (22, 23, 422, 423) zugeordnete exzentrische Belastungsfehlerkomponente korrigiert oder zumindest verringert werden kann.

2. Wägezelle nach Anspruch 1, **dadurch gekennzeichnet dass** die Testgewichtsauflagestellen (16, 17, 18, 19, 20) sich innerhalb eines die Wägelastangriffsachse (A) enthaltenden, den horizontalen Dimensionen des Wägelastaufnehmers (3) entsprechenden Bereichs befinden.

3. Wägezelle nach Anspruch 2, **dadurch gekennzeichnet, dass** der Testlastaufnehmer (4) vorzugsweise fünf Testgewichtsauflagestellen (16, 17, 18, 19, 20) umfasst, nämlich eine erste Testauflagestelle (17), welche in der Wägelastangriffsachse (12) zentriert ist, eine zweite und eine dritte Testgewichtsauflagestelle (16, 19), welche bezüglich der Längsrichtung der Parallelogrammführung von der ersten Testauflagestelle (17) nach beiden Seiten je um eine gleiche Distanz verschoben sind, sowie eine vierte und eine fünfte Testgewichtsauflagestelle (18, 20), welche bezüglich der Querrichtung der Parallelogrammführung von der ersten Testauflagestelle (17) nach beiden Seiten je um eine gleiche Distanz verschoben sind.

4. Wägezelle (101) nach einem der Ansprüche 1 bis 3, **dadurch gekennzeichnet, dass** der Testlastaufnehmer (104) mit den mindestens drei Testgewichtsauflagestellen (116, 117, 118, 119, 120) sich in einem Bereich befindet, welcher ausserhalb der zentral zum Wägelastaufnehmer (103) definierten Wägelastachse (A) liegt.

5. Wägezelle (1, 101) nach einem der vorhergehenden Ansprüche, **dadurch gekennzeichnet, dass** das mindestens eine Testgewicht (15. 115) durch die Testgewichtsbetätigungsvorrichtung (14, 114) nacheinander an verschiedenen Testgewichtsauflagestellen des Testlastaufnehmers (4, 104) abgesetzt und jeweils während der Bewegung von einer Testgewichtsauflagestelle (16, 17, 18, 19, 20; 116, 117, 118, 119, 120) zur nächsten vom der Testlastaufnehmer (4, 104) entkoppelt, bzw. abgehoben wird.

6. Wägezelle (201) nach einem der vorhergehenden Ansprüche, **dadurch gekennzeichnet, dass** das mindestens eine Testgewicht (215) horizontal gleitend aus einer Parkierstellung (210) auf den Testlastaufnehmer (204) verschoben, durch lineares Verschieben auf dem Testlastaufnehmer (204) sowie karussellartiges Drehen des Testlastaufnehmers (204) in die verschiedenen Testgewichtsauflagestellen (216, 217, 218, 219, 220, 226, 227, 228, 229, 230) bewegt wird und anschliessend zurück in die Parkierstellung (210) verschoben wird, wobei das Testgewicht (215) in der Parkierstellung (210) vom Testlastaufnehmer (204) entkoppelt ist und auf seinem Verschiebungsweg und während der Zwischenhalte in den Testgewichtsauflagestellen (216, 217, 218, 219, 220, 226, 227, 228, 229, 230) den Testlastaufnehmer (204) kontinuierlich belastet.

7. Wägezelle (301) nach einem der Ansprüche 1 bis 6, **dadurch gekennzeichnet, dass** eine Mehrzahl von Testgewichten vorhanden sind, wobei jeder Testauflagestelle (316, 317, 318, 319, 320) des Testlastaufnehmers (304) ein Testgewicht (326, 327, 328, 329, 330) mit einer eigenen Testgewichtsbetätigungsvorrichtung (346, 347, 348, 349, 350) zugeordnet ist, durch welche das Testgewicht (326, 327, 328, 329, 330) auf seiner zugeordneten Testauflagestelle (316, 317, 318, 319, 320) abgesetzt und von derselben abgehoben werden kann.

8. Wägezelle nach Anspruch 7, **dadurch gekennzeichnet, dass** die Anordnung der Testgewichte (326, 327, 328, 329, 330) des Testlastaufnehmers (304) mit den Testauflagestellen (316, 317, 318, 319, 320) und der Betätigungsvorrichtungen (346, 347, 348, 349, 350) gleichzeitig die Funktion einer automatischen Kalibriervorrichtung erfüllen kann, wobei durch Auflegen von Kombinationen der Testgewichte (326, 327, 328, 329, 330) die Empfindlichkeit und ggf. die Linearität der Wägezelle geprüft und wenn nötig korrigiert wird.

9. Wägezelle (1, 101, 201, 301) nach einem der vorhergehenden Ansprüche, **dadurch gekennzeichnet, dass** die Anordnung der Testgewichte, des Testlastaufnehmers mit den Testgewichtsauflagestellen und der Betätigungsvorrichtungen als Moduleinheit ausgeführt ist, welche unabhängig montiert und bedarfsweise in die Wägezelle (1, 101, 201, 301) eingebaut, bzw. von der Wägezelle weggelassen werden kann.

10. Wägezelle(1, 101, 201, 301) nach einem der vorhergehenden Ansprüche, **dadurch gekennzeichnet, dass** mindestens einer der Parallellenker (8, 9) im Bereich der dem feststehenden Parallelogrammschenkel (7) zugewandten Lagerstelle (10, 13) in Längsrichtung in zwei Lenkerenden (24, 25) aufgespaltet ist, wobei jedem der zwei Lenkerenden (24, 25) ein Justierbereich (26, 27) zugeordnet ist, mit welchem das betreffende Lenkerende (24, 25) in vertikaler Richtung verschoben werden kann, wobei eine erste Stelleinheit (22) zur vertikalen Verschiebung des ersten Lenkerendes (24) und eine zweite Stelleinheit (23) zur vertikalen Verschiebung des zweiten Lenkerendes (25) vorhanden ist.

11. Verfahren zur Korrektur exzentrischer Belastungsfehler in einer Wägezelle nach einem der Ansprüche 1 bis 10, **dadurch gekennzeichnet, dass** mindestens ein Testgewicht nacheinander an verschiedenen Testgewichtsauflagestellen mit dem Testlastaufnehmer der Wägezelle gekoppelt wird und für jede Position des Testgewichts jeweils ein zugehöriger Testgewichtswert ermittelt wird und ferner dass aus den Testgewichtswerten die exzentrischen Belastungsfehler bestimmt werden und aufgrund der exzentrischen Belastungsfehler entsprechende Justiereinstellungen berechnet werden, dass die Stelleinheiten zur Ausführung der berechneten Justiereinstellungen durch Steuersignale gesteuert werden, und dass das Verfahren solange iteriert wird, bis die exzentrischen Belastungsfehler innerhalb einer vorgegebenen Toleranz liegen.

12. Verfahren nach Anspruch 11, **dadurch gekennzeichnet, dass** in einem Werksabgleich an der fertig montierten Waage die exzentrischen Belastungsfehler durch Auflegen einer externen Prüflast in verschiedenen Positionen auf dem Wägelastaufnehmer ermittelt und anschliessend korrigiert werden, dass anschliessend ein Messzyklus mit dem Testgewicht in den verschiedenen Testgewichtsauflagestellen des Testlastaufnehmers durchgeführt wird und dass die den Testgewichtsauflagestellen zugeordneten Wägeresultate oder davon abgeleitete Werte durch die Prozessoreinheit gespeichert werden, damit sie später im Gebrauch der Waage als Referenzwerte für die erfindungsgemässe Korrektur der exzentrischen Belastungsfehler verwendet werden können.

13. Verfahren nach einem der Ansprüche 11 oder 12, **dadurch gekennzeichnet, dass** aus den Differenzen der Testgewichtswerte und von in einem Speicher der Prozessoreinheit gespeicherten Werte die exzentrischen Belastungsfehler bestimmt werden, aufgrund derer die Stelleinheiten sodann zur Ausführung der erforderlichen Justiereinstellungen gesteuert werden.

14. Verfahren nach einem der Ansprüche 11 bis 13, **dadurch gekennzeichnet, dass** eine mögliche Temperaturabhängigkeit eines exzentrischen Belastungsfehlers ebenfalls im Rahmen des Werksabgleichs, während der Aufnahme der Parameter zur Temperaturkompensation ermittelt werden kann und während der Korrektur der exzentrischen Belastungsfehler im Bedienumfeld des Benutzers Berücksichtigung findet.

15. Verfahren nach einem der Ansprüche 11 bis 14, **dadurch gekennzeichnet, dass** die Testgewichte zusätzlich auch in mindestens einer Kombination miteinander mit dem Testlastaufnehmer der Wägezelle gekoppelt werden und dass für die Kombinationen von Testgewichten zugehörige Testwägewerte bestimmt werden und ferner dass, falls die Testwägewerte von gespeicherten Kalibrierwerten abweichen, die Empfindlichkeit und ggf. die Linearität der Wägezelle korrigiert wird.

## Claims

1. A weighing cell (1, 101, 201, 301, 401) with weighing electronics (2) and a parallel guiding mechanism, wherein the parallel guiding mechanism comprises a movable parallelogram leg (5, 105, 205, 305) connected to a weighing load receiver (3) and to a test load receiver (4, 104, 204, 304) and a stationary parallelogram leg (7, 107, 207, 407) connected to a supporting basic structure (6) of the weighing cell (1, 101, 201, 301, 401) as well as at least two parallel-guiding member (8, 9, 408), which connect the parallelogram legs (5, 105, 205, 305, 7, 107, 207, 407) by bearing points (10, 11, 12, 13), a vertical weighing load application axis (A) is defined, furthermore with a test weight actuating device (14, 346, 347, 348, 349, 350), by means of which at least one test weight (15, 215, 326, 327, 328, 329, 330) can be positioned successively at at least three test weight support points (16, 17, 18, 19, 20, 116, 117, 118, 119, 120, 216, 217, 218, 219, 220, 226, 227, 228, 229, 230, 316, 317, 318, 319, 320) of the test load receiver (4, 104, 204, 304) not lying in a straight line, and with a processor unit (21) with the function of controlling the positioning of the at least one test weight (15, 215, 326, 327, 328, 329, 330) on the test weight support points (16, 17, 18, 19, 20, 116, 117, 118, 119, 120, 216, 217, 218, 219, 220, 226, 227, 228, 229, 230, 316, 317, 318, 319, 320) by means of a control signal (S1) and of subsequently receiving in each position a test weighing signal (T) associated with the test weight support point (16, 17, 18, 19, 20, 116, 117, 118, 119, 120, 216, 217, 218, 219, 220, 226, 227, 228, 229, 230, 316, 317, 318, 319, 320) concerned from the weighing electronics (2) and with the function of ascertaining eccentric loading errors of the weighing cell (1, 101, 201, 301, 401) on the basis of the test weighing signals (T), **characterised in that** the weighing cell (1, 101, 201, 301, 401) is provided with a device for correcting eccentric loading errors, said device comprising at least a first and a second motor-operated actuating unit (22, 23, 422, 423) controlled by control signals (S2) of the processor unit (21), by means of which in each case a geometrical-mechanical change in the parallel guiding mechanism assigned to the actuating unit (22, 23, 422, 423) concerned can be generated, as a result of which an eccentric loading error component assigned to this change and thus to this actuating unit (22, 23, 422, 423) can be corrected or at least reduced.

2. The weighing cell according to claim 1, **characterised in that** the test weight support points (16, 17, 18, 19, 20) are located inside a region containing the weighing load application axis (A) and corresponding to the horizontal dimensions of the weighing load receiver (3).

3. The weighing cell according to claim 2, **characterised in that** the test load receiver (4) preferably comprises five test weight support points (16, 17, 18, 19, 20), i.e. a first test support point (17), which is centred in the weighing load application axis (12), a second and a third test weight support point (16, 19), which are displaced relative to the longitudinal direction of the parallel guiding mechanism from the first test support point (17) to both sides in each case by the same distance, as well as a fourth and a fifth test weight support point (18, 20), which are displaced relative to the transverse direction of the parallel guiding mechanism from the first test support point (17) to both sides in each case by the same distance.

4. The weighing cell (101) according to any one of claims 1 to 3, **characterised in that** the test load receiver (104) with the at least three test weight support points (116, 117, 118, 119, 120) is located in a region which lies outside the weighing load axis (A) defined centrally with respect to the weighing load receiver (103).

5. The weighing cell (1, 101) according to any one of the preceding claims, **characterised in that** the at least one test weight (15, 115) is set down successively by means of the test weight actuating device (14, 114) at different test weight support points of the test load receiver (4, 104) and in each case is decoupled or raised from the test load receiver (4, 104) during the movement from one test weight support point (16, 17, 18, 19, 20; 116, 117, 118, 119, 120) to the next.

6. The weighing cell (201) according to any one of the preceding claims, **characterised in that** the at least one test weight (215) is displaced horizontally in a sliding manner from a parking position (210) onto a test load receiver (240), is moved by linear displacement on the test load receiver (240) and by carousel-like rotation of the test load receiver (204) into the various test weight support points (216, 217, 218, 219, 220, 226, 227, 228, 229, 230) and is then displaced back into parking position (210), wherein the test weight (215) in the parking position (210) is decoupled from test load receiver (204) and continuously loads the test receiver (204) on its displacement path and during the intermediate stops in the test weight support points (216, 217, 218, 219, 220, 226, 227, 228, 229, 230).

7. The weighing cell (301) according to any one of claims 1 to 6, **characterised in that** a plurality of test weights is present, there being assigned to each test support point (316, 317, 318, 319, 320) of the test load receiver (304) a test weight (326, 327, 328, 329, 330) with its own test weight actuating device (346, 347, 348, 349, 350), by means of which the test weight (326, 327, 328, 329, 330) can be set down on its assigned test support point (316, 317, 318, 319, 320) and raised from the latter.

8. The weighing cell according to claim 7, **characterised in that** the arrangement of the test weights (326, 327, 328, 329, 330), of the test load receiver (304) with the test weight support points (316, 317, 318, 319, 320) and of the actuating devices (346, 347, 348, 349, 350) can simultaneously perform the function of an automatic calibration device, wherein the sensitivity and, if need be, the linearity of the weighing cell is tested by placing on combinations of test weights (326, 327, 328, 329, 330) and, if necessary, corrected.

9. The weighing cell (1, 101, 201, 301) according to any one of the preceding claims, **characterised in that** the arrangement of the test weights, of the test load receiver with the test weight support points and of the actuating devices is constituted as a modular unit, which can be assembled independently and, if need be, can be installed in the weighing cell (1, 101, 201, 301) or can be omitted from the weighing cell.

10. The weighing cell (1, 101, 201, 301) according to any one of the preceding claims, **characterised in that** at least one of the parallel-guiding member (8, 9) is split up into two guiding member ends (24, 25) in the longitudinal direction in the region of the bearing point (10, 13) facing towards the stationary parallelogram leg (7), wherein there is assigned to each of the two guiding member ends (24, 25) an adjustment region (26, 27) with which the guiding member end (24, 25) concerned can be displaced in the vertical direction, wherein a first actuating unit (22) is present for the vertical displacement of the first guiding member end (24) and a second actuating unit (23) for the vertical displacement of the second guiding member end (25).

11. A method for correcting eccentric loading errors in a weighing cell according to any one of claims 1 to 10, **characterised in that** at least one test weight is successively coupled at different test weight support points with the test load receiver of the weighing cell and an associated test weight value is ascertained in each case for each position of the test weight and furthermore that the eccentric loading errors are determined from the test weight values and corresponding adjustment settings are calculated on the basis of the eccentric loading errors, that the actuating units for performing the calculated adjustment settings are controlled by control signals, and that the method is iterated until such time as the eccentric loading errors lie within a preset tolerance.

12. The method according to claim 11, **characterised in that**, in a factory calibration on the ready-assembled scales, the eccentric loading errors are ascertained by placing an external test load in various positions on the weighing load receiver and then corrected, that a measurement cycle is then carried out with the test weight in various test weight support points of the test load receiver and that the weighing results assigned to the test weight support points or values derived therefrom are stored by the processor unit, in order that they can be used as reference values for the correction of the eccentric loading errors according to the invention when the scales are used subsequently.

13. The method according to any one of claims 11 or 12, **characterised in that** there are determined from the differences in the test weight values and from the values stored in the memory of the processor unit the eccentric loading errors, on the basis of which the actuating units are then controlled to perform the required adjustment settings.

14. The method according to any one of claims 11 to 13, **characterised in that** a possible temperature dependence of an eccentric loading error can also be determined as part of the factory calibration, during the recording of the parameters for the temperature compensation, and is taken into account during the correction of the eccentric loading errors in the user's control panel.

15. The method according to any one of claims 11 to 14, **characterised in that** in addition the test weights are also coupled, in at least one combination with one another, with the test load receiver of the weighing cell and that test weighing values associated with the combinations of test weights are determined and furthermore that, if the test weighing values diverge from the stored calibration values, the sensitivity and, if appropriate, the linearity of the weighing cell is corrected.

## Revendications

1. Cellule de pesage (1, 101, 201, 301, 401) comprenant une électronique de pesage (2) et un guide à parallélogramme, le guide à parallélogramme comprenant une branche de parallélogramme (5, 105, 205, 305) mobile reliée à un récepteur de charge de pesage (3) et à un récepteur de charge d'essai (4, 104, 204, 304), ainsi qu'une branche de parallélogramme (7, 107, 207, 407) immobile reliée à une structure de base portante (6) de la cellule de pesage (1), ainsi qu'au moins deux bielles parallèles (8, 9, 408) reliant les branches de parallélogramme (5, 105, 205, 305, 7, 107, 207, 407) par des points d'appui (10, 11, 12, 13), un axe vertical d'attaque de charge de pesage (A) étant défini, comprenant en outre un dispositif de commande de poids d'essai (14, 346, 347, 348, 349, 350) permettant de placer au moins un poids d'essai (15, 215, 326, 327, 328, 329, 330) à la suite d'au moins trois points d'appui de poids d'essai (16, 17, 18, 19, 20, 116, 117, 118, 119, 120, 216, 217, 218, 219, 220, 226, 227, 228, 229, 230, 316, 317, 318, 319, 320) du récepteur de charge d'essai (4), et une unité de processeur (21) avec des fonctions consistant à commander la disposition de l'au moins un poids d'essai (15, 215, 326, 327, 328, 329, 330) sur les points d'appui de poids d'essai (16, 17, 18, 19, 20, 116, 117, 118, 119, 120, 216, 217, 218, 219, 220, 226, 227, 228, 229, 230, 316, 317, 318, 319, 320) avec un signal de commande, et à recevoir ensuite un signal de pesage d'essai (T) respectif en provenance de l'électronique de pesage (2), attribué au point d'appui de poids d'essai (16, 17, 18, 19, 20, 116, 117, 118, 119, 120, 216, 217, 218, 219, 220, 226, 227, 228, 229, 230, 316, 317, 318, 319, 320) correspondant, et à déterminer des erreurs de charge excentrique de la cellule de pesage (1, 101, 201, 301, 401) sur la base des signaux de pesage d'essai (T), **caractérisée en ce que** la cellule de pesage (1, 101, 201, 301, 401) est équipée d'un dispositif destiné à corriger l'erreur de charge excentrique, lequel comprend au moins une unité de réglage (22, 23, 422, 423) commandée par des signaux de commande (S2) de l'unité de processeur (21), au moyen de laquelle une modification mécanique géométrique respectivement attribuée à l'une des unités de réglage (22, 23, 422, 423) peut être générée dans le guide à parallélogramme, permettant ainsi de corriger ou du moins d'atténuer une composante d'erreur de charge excentrique attribuée à cette modification et donc à cette unité de réglage (22, 23, 422, 423).

2. Cellule de pesage selon la revendication 1, **caractérisée en ce que** les points d'appui de poids d'essai (16, 17, 18, 19, 20) se trouvent dans les limites d'une zone correspondant aux dimensions horizontales du récepteur de charge de pesage (3) et contenant l'axe d'attaque de charge de pesage (A).

3. Cellule de pesage selon la revendication 2, **caractérisée en ce que** le récepteur de charge de pesage (3) comprend de préférence cinq points d'appui de poids d'essai (16, 17, 18, 19, 20), notamment un premier point d'appui d'essai (17) centré dans l'axe d'attaque de charge de pesage (12), un deuxième et un troisième point d'appui de charge d'essai (16, 19) décalés dans la direction longitudinale du guide à parallélogramme des deux côtés sur une distance identique par rapport au premier point d'appui d'essai (17), ainsi qu'un quatrième et un cinquième point d'appui de charge d'essai (18, 20) respectivement décalés dans la direction transversale du guide à parallélogramme des eux côtés sur une distance identique par rapport au premier point d'appui d'essai (17).

4. Cellule de pesage (101) selon l'une des revendications 1 à 3, **caractérisée en ce que** le récepteur de charge d'essai (104) avec les au moins trois points d'appui de poids d'essai (116, 117, 118, 119, 120) se trouve dans une région située à l'extérieur de l'axe de charge de pesage (A) défini de façon centrale par rapport au récepteur de charge de pesage (103).

5. Cellule de pesage (1, 101) selon l'une des revendications précédentes, **caractérisée en ce que** l'au moins un poids d'essai (15, 115) est déposé successivement en différents point d'appui de poids d'essai du récepteur de charge d'essai (4, 104) par le dispositif de commande de poids d'essai (14, 114), et désaccouplé ou détaché respectivement du récepteur de charge d'essai (4, 104) pendant le déplacement d'un point d'appui de poids d'essai (16, 17, 18, 19, 20 ; 116, 117, 118, 119, 120) à l'autre.

6. Cellule de pesage (201) selon l'une des revendications précédentes, **caractérisée en ce que** l'au moins un poids d'essai (215) est coulissé horizontalement à partir d'une position de rangement (210) sur le récepteur de charge d'essai (204), déplacé par un coulissement linéaire sur le récepteur de charge d'essai (204) et une rotation du type carrousel du récepteur de charge d'essai (204) vers les différents points d'appui de poids d'essai (216, 217, 218, 219, 220, 226, 227, 228, 229, 230), puis de nouveau coulissé vers la position de rangement (210), le poids d'essai (215) étant désaccouplé du récepteur de charge d'essai (204) dans la position de rangement (210) et pèse continuellement sur le récepteur de charge d'essai (204) sur le trajet de coulissement et pendant les pauses aux points d'appui de poids d'essai (216, 217, 218, 219, 220, 226, 227, 228, 229, 230).

7. Cellule de pesage (301) selon l'une des revendications 1 à 6, **caractérisée en ce qu'**il est prévu une multitude de poids d'essai, un poids d'essai (326, 327, 328, 329, 330) avec un dispositif de commande de poids d'essai (14, 346, 347, 348, 349, 350) correspondant étant attribué à chaque point d'appui d'essai (316, 317, 318, 319, 320) du récepteur de charge d'essai (304), lequel permet de déposer le poids d'essai (326, 327, 328, 329, 330) sur son point d'appui d'essai correspondant (316, 317, 318, 319, 320) et de retirer celui-ci.

8. Cellule de pesage selon la revendication 7, **caractérisée en ce que** l'agencement des poids d'essai (326, 327, 328, 329, 330) du récepteur de charge d'essai (304) avec les points d'appui d'essai (316, 317, 318, 319, 320) et celui des dispositifs de commande (346, 347, 348, 349, 350) peuvent simultanément remplir la fonction de dispositif d'étalonnage automatique, la sensibilité et le cas échéant la linéarité de la cellule de pesage étant vérifiées par application de combinaisons de poids d'essai (326, 327, 328, 329, 330), et corrigées si nécessaire.

9. Cellule de pesage (1, 101, 201, 301) selon l'une des revendications précédentes, **caractérisée en ce que** l'agencement des poids d'essai, du récepteur de charge d'essai avec les points d'appui de poids d'essai et des dispositifs de commande est conçu comme une unité modulaire, laquelle peut être montée séparément et si nécessaire être encastrée dans la cellule de pesage (1, 101, 201, 301), voire omise de la cellule de pesage.

10. Cellule de pesage (1, 101, 201, 301) selon l'une des revendications précédentes, **caractérisée en ce qu'**au moins l'une des bielles parallèles (8, 9) est fendue à deux extrémités de bielle (24, 25) dans le sens longitudinal dans la région du point d'appui (10, 13) tourné vers la branche de parallélogramme immobile (7), une région d'ajustement (26, 27) étant attribuée à chacune des deux extrémités de bielle (24, 25), laquelle permet de déplacer l'extrémité de bielle (24, 25) correspondante dans la direction verticale, une première unité de réglage (22) étant prévue pour le déplacement vertical de la première extrémité de bielle (24) et une deuxième unité de réglage (23) étant prévue pour le déplacement vertical de la deuxième extrémité de bielle (25).

11. Procédé de correction d'erreurs de charge excentrique dans une cellule de pesage selon l'une des revendications 1 à 10, **caractérisé en ce qu'**au moins un poids d'essai est accouplé successivement au récepteur de charge d'essai de la cellule de pesage en différents points d'appui de poids d'essai, une valeur de poids d'essai correspondante étant respectivement déterminée pour chaque position du poids d'essai, et **en ce que** les erreurs de charge excentrique sont déterminées à partir des valeurs de poids d'essai et des réglages d'ajustement correspondants étant calculés sur la base des erreurs de charge excentrique, **en ce que** les unités de réglage sont commandées par des signaux de commande pour l'exécution des réglages d'ajustement calculés, et **en ce que** le procédé est répété jusqu'à ce que les erreurs de charge excentrique tombent dans une plage de tolérance prédéfinie.

12. Procédé selon la revendication 11, **caractérisé en ce qu'**au cours d'un réglage d'usine sur la balance à l'état monté, les erreurs de charge excentrique sont déterminées par application d'une charge d'essai extérieure à différents endroits sur le récepteur de charge de pesage puis corrigées, **en ce qu'**un cycle de mesure est ensuite exécuté avec le poids d'essai au niveau des différents points d'appui de poids d'essai du récepteur de charge d'essai, et **en ce que** les résultats de pesage attribués aux points d'appui de poids d'essai ou les valeurs dérivées de ceux-ci sont enregistrés dans l'unité de processeur, afin de pouvoir être utilisés pendant le fonctionnement de la balance, en tant que valeurs de référence pour la correction selon l'invention des erreurs de charge excentrique.

13. Procédé selon l'une des revendications 11 ou 12, **caractérisé en ce que** les erreurs de charge excentrique sont déterminées à partir des écarts entre les valeurs de poids d'essai et de valeurs enregistrées dans une mémoire de l'unité de processeur, les unités de réglage étant alors commandées en fonction de celles-ci pour l'exécution des réglages d'ajustement requis.

14. Procédé selon l'une des revendications précédentes 11 à 13, **caractérisé en ce que** le lien possible entre une erreur de charge excentrique et la température peut également être détecté dans le cadre du réglage d'usine, pendant l'enregistrement des paramètres pour la compensation de température, et être pris en compte dans l'environnement de commande de l'utilisateur pendant la correction des erreurs de charge excentrique.

15. Procédé selon l'une des revendications 11 à 14, **caractérisé en ce que** les poids d'essai sont en outre également accouplés ensemble au récepteur de charge d'essai de la cellule de pesage dans au moins une combinaison, et **en ce que** des valeurs de poids d'essai correspondantes sont déterminées pour les combinaisons de poids d'essai, et en outre **en ce que** la sensibilité et le cas échéant la linéarité de la cellule de pesage sont corrigées si les valeurs de poids d'essai s'écartent des valeurs d'étalonnage enregistrées.
